Europäisches Patentamt

(19) European Patent Office

Office européen des brevets

(11) Publication number: **0 123 292**
**B1**

# (12) EUROPEAN PATENT SPECIFICATION

(45) Date of publication of patent specification: **14.11.90**

(51) Int. Cl.⁵: **C 04 B 35/58**

(21) Application number: **84104449.8**

(22) Date of filing: **19.04.84**

(54) Silicon nitride sintered body and method for preparing the same.

(30) Priority: **22.04.83 JP 71299/83**
**27.04.83 JP 74538/83**
**10.05.83 JP 81334/83**
**19.05.83 JP 88060/83**

(43) Date of publication of application:
**31.10.84 Bulletin 84/44**

(45) Publication of the grant of the patent:
**14.11.90 Bulletin 90/46**

(84) Designated Contracting States:
**DE FR GB IT SE**

(56) References cited:
**EP-A-0 100 380**
**EP-A-0 117 936**
**JP-A-83 204 874**
**JP-A-84 008 670**
**US-A-4 143 107**

**CHEMICAL ABSTRACTS, vol. 95, no. 6 August
1981, page 296, abstract no. 47838f,
COLUMBUS, OHIO (US) & JP-A-81 009 278**

(73) Proprietor: Toshiba Tungaloy Co., Ltd.
7, Tsukagoshi 1-chome Saiwai-ku
Kawasaki-shi Kanagawa-ken (JP)

(72) Inventor: Fukuhara, Mikio Toshiba Tungaloy
Co., Ltd.
7, Tsukagoshi 1-chome Saiwai-ku
Kawasaki-shi Kanagawa-ken (JP)
Inventor: Maekawa, Yoshitaka Toshiba
Tungaloy Co., Ltd.
7, Tsukagoshi 1-chome Saiwai-ku
Kawasaki-shi Kanagawa-ken (JP)
Inventor: Fukazawa, Kenji Toshiba Tungaloy
Co., Ltd.
7, Tsukagoshi 1-chome Saiwai-ku
Kawasaki-shi Kanagawa-ken (JP)
Inventor: K
7, Tsukagoshi 1-chome Saiwai-ku
Kawasaki-shi Kanagawa-ken (JP)

(74) Representative: Hansen, Bernd, Dr.rer.nat. et al
Hoffmann, Eitle & Partner Patentanwälte
Arabellastrasse 4 Postfach 81 04 20
D-8000 München 81 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## EP 0 123 292 B1

(56) References cited:
   CHEMICAL ABSTRACTS, vol.99, no.12,
   September 1983, page 283, abstract no. 92.704c,
   COLUMBUS, OHIO (US) & JP-A-83 060 675

   CHEMICAL ABSTRACTS, vol. 98, no.12 March
   1983, page 303, abstract no. 94.543c, Columbus,
   Ohio (US) & JP-A-82 175 777

**Description**

This invention relates to a high-strength silicon nitride sintered body suitable for heat resistant structural materials, machine tool materials especially cutting tool materials, wear resistant materials and corrosion resistant materials, and to a method for preparing the sintered body.

A silicon nitride compound has a strong covalent bond, decomposes and evaporates at a high temperature, is poor in a reactivity because of a small self diffusion coefficient of its constitutional atoms, and has a greater ratio of a surface energy to a grain boundary energy, as compared with an ionic crystal and a metallic crystal, therefore the compound above is very difficult to sinter. When the silicon nitride is thus sintered in a usual pressureless sintering manner, any dense sintered body cannot be obtained. In order to produce the dense sintered body, a sintering auxiliary such as MgO, $Y_2O_3$, $Al_2O_3$ or AlN is generally used and a pressure sintering or a hot isostatic pressing method (HIP) is utilized under a reaction sintering or a liquid phase sintering.

In the $Si_3N_4$ sintered body including sintering auxiliaries such as MgO, $Y_2O_3$, $Al_2O_3$ or AlN, a lower silicate is formed in grain boundary phases thereof. A liquid phase of the lower silicate occurs at a low temperature accelerating the sinterability of the $Si_3N_4$. However, it remains in the grain boundary phases even after the sintering process, thereby disadvantageously lowering the strength of the sintered body at a high temperature. For the sake of overcoming such a drawback, a method has been suggested by which the lower silicate remaining in the grain boundary phases of the $Si_3N_4$ has been crystallized due to thermal treatment. Thereby, the strength of the sintered body increases. The lower silicate or second phases will be relatively uniformly dispersed in the grain boundary phases of the $Si_3N_4$, when the $Si_3N_4$ sintered body is tentatively sintered in a small size. In this case, thus, no serious problem has occurred. However, when a body having a complicated shape or great size is sintered on an industrial scale, the second phases mainly comprising the sintered auxiliary of an oxide will non-uniformly be dispersed in the grain boundary phases of the $Si_3N_4$ and a segregation will be brought about, because of a bad reactivity of the $Si_3N_4$ with the sintering auxiliary, and because of the problem of a cooling rate at the time of using a large-scale sintering furnace. As understood from the foregoing, the bad reactivity of the $Si_3N_4$ with the sintering auxiliary and the segregation of the second phases mainly comprising the sintered auxiliary will lead to an increased scattering of properties of the $Si_3N_4$ sintered body and will cause a drop in the strength. Therefore, it is fair to say that an industrialization of such a suggested method is difficult from the viewpoint of technology.

In Chemical Abstracts, Vol. 95, 1981, page 296, abstract No. 47838f concerning Japanese Provisional Patent Publication No. 9278/1981 discloses a process for preparing high-resistant, high-strength silicon nitride sintered bodies wherein the whole amount of rare earth elements can be present as an oxide. U.S. patent No. 4 143 107 discloses a silicon nitride-based sintered material and a method for manufacturing the same which comprises embedding a molded mass of silicon nitride and at least one rare earth metal oxide in a powder comprising aluminum nitride and sintering said molded mass.

This invention has thus been achieved with the intention of solving the above-mentioned drawbacks and problems, and its object is to provide a silicon nitride sintered body and a method for preparing it by which a reactivity of $Si_3N_4$ with a sintering auxiliary is improved. Second phases uniformly disperse into the sintered body having an intricate shape or a great size, a bonding strength between the second phases and the $Si_3N_4$ will increase and build up many properties such as strength, thermal resistance, wear resistance and toughness of the sintered body.

A silicon nitride sintered body containing compounds of rare earth elements according to this invention is characterized by comprising:

(A) 0.5 to 25% by weight of at least one of an oxynitride of rare earth element selected from scandium, yttrium and lanthanide elements;

(B) 0.5 to 25% by weight of at least one of nitride of an element consisting of beryllium, magnesium, calcium, strontium, barium and radium and/or at least one of nitride of an element selected from boron, aluminum, gallium, indium and thallium; and

(C) a remainder consisting of silicon nitride and inevitable impurities,

provided that the combination of (A) yttrium oxynitride with (B) magnesium nitride is excluded.

Further, a method for producing silicon nitride sintered bodies according to this invention is characterized by comprising the steps of obtaining a powder compact or a molded product from a mixed powder which is composed of the above-mentioned components; and thermally sintering said powder compact or said molded product at a temperature of 1500 to 1900°C in a non-oxidizing atmosphere.

Of sintering auxiliaries each containing nitrogen atoms, especially nitrogen atom-containing compounds of rare earth elements have a lower decomposition temperature and are activated at a lower temperature, as compared with other sintering auxiliaries mainly comprising oxides. Therefore, a reactivity between the sintering auxiliary and $Si_3N_4$ can be increased by using the sintering auxiliary of the nitrogen-containing component. Further, since the reaction between the sintering auxiliary and the $Si_3N_4$ is not limited, the nitrogen-containing sintering auxiliary can be dissolved in the $Si_3N_4$ as a solid solution, though partially, and the sintering auxiliary can thus be uniformly dispersed into grain boundary areas of the $Si_3N_4$ and promotes the sintering operation. The nitrogen component contained in the sintering auxiliary serves to heighten a bonding strength between second phases chiefly comprising the sintering auxiliary and the $Si_3N_4$ rigid phases after a sintering operation, therefore it is possible to prevent evils such as a segregation of the sintering auxiliary, a sintering unevenness, a residual pores and an abnormal growth of $Si_3N_4$ grains. Furthermore, since an internal stress resulting from a crystalline anisotropy of the second phases and the $Si_3N_4$ is small in the case of using such a sintering auxiliary, a powder compact having a complicated shape or a great size can easily and uniformly be sintered and a dense and high-strength sintered body having a high dimensional accuracy can easily be prepared. Of the sintering auxiliaries used here, an oxynitride of the rare earth elements scandium, yttrium and/or lanthanide elements surrounds the $Si_3N_4$ grains and uniformly and dispersedly penetrates through the grain boundaries of the $Si_3N_4$, together with a nitride of elements in group IIa and/or group IIIb of the periodic table, so that a formation of the second phases mainly comprising the sintering auxiliary and a mutual diffusion between nitrogen atoms in the second phases and nitrogen atoms in the $Si_3N_4$ are promoted in a sintering process. As a result, a bonding strength between the $Si_3N_4$ and the second phases are strengthened and the segregation of the second phases is prevented, so that the strength of the sintered body at a high temperature are heightened. Further, the silicon nitride sintered body according to this invention is capable of making a cutting of a heat resistant alloy or a steel material having a high rupture strength by using a sintering auxiliary containing nitrogen element, as compared with a $Si_3N_4$ sintered body which is produced by using an oxide type sintering auxiliary. Furthermore, nitrides of the elements in group IIa and/or nitrides of the elements in group IIIb of the periodic table which are used as the sintering auxiliaries facilitate the occurrence of liquid phases. And they have a greater effect of promoting the sintering of the $Si_3N_4$ than compounds of the rare earth elements, and the properties of the sintered body are improved by the formation of the uniform second phases mainly comprising the sintering auxiliary and the chemical bonding of the rare earth elements in the second phases with silicon atoms in the $Si_3N_4$ material.

The rare earth elements used in this invention include 16 elements of Sc, Y, La, Ce, Pr, Nd, Sm, Eu, Gd, Tb, Dy, Ho, Er, Tm, Yb and Lu, the elements in group IIa of the periodic table include 6 elements of Be, Mg, Ca, Sr, Ba and Ra, and the elements in group IIIb of the periodic table include 5 elements of B, Al, Ga, In and Tl.

As a sintering material for the silicon nitride sintered body according to this invention, the $Si_3N_4$ powder ground as finely as possible is preferred. Moreover, it is preferred that the $Si_3N_4$ powder used as the starting material has a high purity. However, when an amount of Al, Fe and the like contained as impurities in the $Si_3N_4$ powder is 0.5% by weight or less, when oxygen is adsorbed on the surfaces of the $Si_3N_4$ powder grains to form $SiO_2$, or when the blended powder is mixed and ground by $Al_2O_3$ balls, steel balls, hard metal balls or the like in a vessel, even if impurities dissolved out from the vessel and these balls are present in an amount of 5% by weight or less, the high-strength silicon nitride sintered body can be produced by adjusting an amount of the sintering auxiliary, an amount of the oxynitride of the rare earth element used as the sintering auxiliary, and an amount of nitrogen in the nitride of the element in group IIa of the periodic table. As starting materials of the $Si_3N_4$ used in this invention, there may be used $\alpha$-$Si_3N_4$, $\beta$-$Si_3N_4$, amorphous $Si_3N_4$ or a mixture including these materials having different crystalline structures in an optional ratio. Further, of at least one of the oxynitrides of the rare earth elements as the sintering auxiliaries and at least one of the nitrides of the elements in group IIa and/or at least one of the nitrides of the elements in group IIIb of the periodic table, nitrogen-containing compounds may be stoichiometric or substoichiometric compounds. Among them, the nitrogen-containing compounds of the rare earth elements particularly tend to be oxidized in the atmosphere, therefore they are required to be treated in the presence of an inert gas such as a nitrogen gas, but it is preferable to use these compounds which have been converted into complex compounds with the elements in group IIa of the periodic table.

Here, the reason why contents of the components constituting the sintered body are limited as mentioned above will be elucidated.

When a content of at least one of the oxynitrides of the rare earth elements is less than 0.5% by weight, the second phases principally comprising the sintering auxiliary will be poor in strength at a high temperature and the obtained sintered body itself will thus be weakened. When it is more than 25% by weight, an amount of the $Si_3N_4$ will be relatively reduced, and the hardness, the wear resistance and the heat resistance of the sintered body will be lowered. Accordingly, its content is to be within the range of 0.5 to 25% by weight.

Further, when a content of at least one of the nitride of the elements in group IIa and/or at least one of the nitride of the elements in group IIIb of the periodic table is less than 0.5% by weight, it will be weak in an effect of promoting the sintering of the $Si_3N_4$. In contrast, when it is more than 25% by weight, an amount of the $Si_3N_4$ will be relatively reduced, and a lower silicate will tend to be formed in the second phases mainly comprising the sintering auxiliary, with the result that deteriorations in the hardness and the strength of the sintered body will be brought about. Accordingly, its content is to be within the range of 0.5 to 25% by weight.

Preferred embodiments of the silicon nitride sintered bodies according to this invention are:

(1) The silicon nitride sintered body comprising 0.5 to 25% by weight of at least one of the oxynitrides of the rare earth elements; 0.5 to 25% by weight of at least one of the nitrides of the elements in group IIa of the periodic table; and a remainder including the silicon nitride and inevitable impurities.

(2) The silicon nitride sintered body comprising 0.5 to 25% by weight of at least one of the oxynitrides of the rare earth elements; 0.5 to 25% by weight of at least one of the nitrides and of B, Al, Ga, In and Tl; and a remainder including the silicon nitride and inevitable impurities.

In the silicon nitride sintered body of this invention, there may be contained one or more of a hydride of elements in groups IV and V of the periodic table in an amount of not more than 5% by weight. By the addition of the hydride of elements in groups IV and V of the periodic table, unevenness of color in the sintered body is decreased and the characteristics in the sintered body becomes uniform so that the quality of the sintered body is improved. Further, in the sintering process, the hydride has a function of removing carbon or oxygen which are adhered to starting materials and facilitating the sintering of the sintered body.

In the silicon nitride sintered body according to this invention, there may be further included one or more of a carbide and a nitride of elements in groups IVa, Va and VIa, and an oxide, a nitride, an oxynitride of Li, Na and K.

The carbide, the nitride and the like of the elements in groups IVa, Va and VIa of the periodic table which are dissolved out from hard metal balls or the like used at a mixing and grinding operation contribute to an improvement in the wear resistance of the sintered body according to this invention. Silicon dioxide, aluminum family elements and iron family elements which have been introduced from the vessel and the balls at the mixing and grinding operation of the starting material powder accelerate a mutual diffusion reaction between silicon and nitrogen in the $Si_3N_4$. Particularly, since the $SiO_2$ causes, in an amount of not more than 1.2% by weight, a decomposition temperature inherent in the $Si_3N_4$ to drop, a reaction of the $Si_3N_4$ with the sintering auxiliary will occur even at a lower temperature. It can thus be believed that the $SiO_2$ compound contributes to sinterability and densification. Oxides, nitrides and oxynitrides of Li, Na and K which are elements in group Ia of the periodic table contribute to sinterability and densification, like the nitrides of the elements in group IIa of the periodic table, and they are then partially decomposed and removed during sintering. Since playing a secondary role for the nitrides of the elements in group IIa of the periodic table in such a procedure above, the aforesaid compounds of Li, Na and K may be included in such an amount that the properties of the high-strength silicon nitride sintered body according to this invention are not impaired.

In the manufacturing method of the high-strength silicon nitride sintered body according to this invention, 0.5 to 25% by weight of a powder of at least one of the oxynitrides of the rare earth elements and 0.5 to 25% by weight of a powder of at least one of the nitrides of the elements in group IIa and/or at least one of the nitrides of the elements in group IIIb of the periodic table may be mixed with the $Si_3N_4$ powder. Further, a composite compound powder may be mixed with the $Si_3N_4$ powder as a starting material, which composite compound comprises at least one of the oxynitrides of the rare earth elements and at least one of the nitrides of the elements in group IIa and/or at least one of the nitrides of the elements in group IIIb of the periodic table. Furthermore, another composite compound powder may be mixed with the $Si_3N_4$ powder as a starting material, which composite compound comprises at least one of the oxynitrides of the rare earth elements, at least one of the nitrides of the elements in group IIa of the periodic table, and the $Si_3N_4$. Particularly, when the composite compound powder above is used as the starting material, the sintered body will be prevented from being converted into a rod or a needle-like structure having a small aspect ratio. Since the sintered body which is composed of the grains having the small aspect ratio is excellent in a thermal shock resistance, the composite compound powder is preferably used as the starting material in the case that the sintered body will be utilized in the form of a cutting tool which will locally be subjected to a rigorous thermal shock.

In the manufacturing method according to this invention, each starting material has been obtained by mixing or grinding, and then the mixed powder may be packed in mold. Thus, the molded product may be preliminarily sintered at a lower temperature than a sintering temperature. Further, this preliminarily sintered product may be sintered in a non-oxidizing atmosphere or under a vacuum by means of a sintering procedure such as a usual sintering (inclusive of a pressureless sintering), pressure sintering by induction heating and direct current furnace, a gas pressure sintering or a hot pressing. Furthermore, densification of the sintered bodies is promoted using a hot isostatic press. The sintering temperature is within the range of 1500 to 1900°C, though varying with the used sintering manner and blended components. Such a temperature above permits the sufficiently dense sintered body to be obtained.

Now, this invention will be described in detail in accordance with the following examples.

Example 1

In proportions shown in Table 1, there were blended powders of $Si_3N_4$ (comprising about 40% of amorphous $Si_3N_4$, $\alpha$-$Si_3N_4$ and $\beta$-$Si_3N_4$) having an average grain diameter of 1 μm, and $Y_3O_3N_3$ and AlN in order to prepare samples. The sample was mixed and ground by use of WC-based hard metal balls in a hexane solvent in a stainless steel vessel. A rectangular carbon mold as large as 100 mm×100 mm which was covered with a BN powder was packed with the obtained mixed powder. The interior in a furnace was replaced with an $N_2$ gas, and then a pressure sintering was carried out at a pressure of 15 to 40 MPa (150 to 400 kg/cm²) at a temperature of 1700 to 1900°C for a holding time of 60 to 120 minutes. Manufacturing conditions for the sample are shown in Table 1. The thus obtained sintered bodies were separated into a central portion and an outer peripheral portion, and each portion was cut approximately 13×13×5 mm. Properties of each cut sample were inspected by comparing it with Comparative Sample No. 1 (sintered body of 4%$Y_2O_3$-4%MgO-92%$Si_3N_4$ in weight) and Comparative Sample No. 2 (sintered body of 5%$Y_2O_3$-2%$Al_2O_3$-93%$Si_3N_4$ in weight). Results are shown in Table 2.

# EP 0 123 292 B1

TABLE 1

| Sample No. | Blended components (% by weight) | Sintering conditions | |
|---|---|---|---|
| | | Temperature (°C) | Holding time (min) |
| 1 | $3\%Y_3O_3N$-$3\%AlN$-$94\%Si_3N_4$ (1 μm) | 1900 | 120 |

TABLE 2

| Sample No. and position | Hardness (HRA) | Thermal shock test (°C) | KIc $(MN/m_{3/2})$ | Sample No. and position | Hardness (HRA) | Thermal shock test (°C) | KIc $(MN/m_{3/2})$ |
|---|---|---|---|---|---|---|---|
| Central portion of 1 | 94.0 | 520 | 8.57 | Peripheral portion of 1 | 93.9 | 540 | 8.55 |
| Central portion of comparative sample 1 | 92.1 | 540 | 7.16 | Peripheral portion of comparative sample 1 | 93.1 | 440 | 6.27 |
| Central portion of comparative sample 2 | 92.2 | 380 | 4.97 | Peripheral portion of comparative sample 2 | 93.5 | 440 | 6.10 |

It can be confirmed from the results in Table 2 that the silicon nitride sintered body according to this invention has a high rigidity, thermal shock resistance and fracture roughness value (KIc), was smaller in a deviation of properties between the central portion and the outer peripheral portion thereof, as compared with Comparative Sample No. 1 (a $Y_2O_3$-$MgO$-$Si_3N_4$ sintered body) and Comparative Sample No. 2 (a $Y_2O_3$-$Al_2O_3$-$Si_3N_4$ sintered body), and could be uniformly sintered even if it was of a large size. Each result of the thermal shock tests carried out here is represented with a temperature at which no crack occurred in each sample dipped in water of about 20°C (room temperature) after 2 minutes' holding at each temperature. Further, each fracture toughness value above was calculated from a length of a crack and a size of an indent which were generated by a Vickers indent of 30 kg load. Furthermore, the respective outer peripheral portion of Sample No. 1 was examined by means of an X-ray diffraction and a X-ray fluorescence analysis, and it was confirmed that Co and W were included therein and the element W was considered to be present in the form of tungsten silicide.

Example 2

In proportions shown in Table 3, materials were blended which were the $Si_3N_4$ having an average grain diameter of 1 μm which was used in Example 1, YMgON, $YMgSi_3ON_5$, $MgSiN_2$, other oxides of rare earth elements and compounds of elements in group IIa of the periodic table. A mixed powder of each sample was prepared in the same procedure as in Example 1. Each mixed powder was then sintered under the same manufacturing conditions as in Example 1, and properties of the resulting sintered body were investigated by the same procedure as in Example 1. Results obtained are shown in Table 4.

TABLE 3

| Sample No. | Blended component (% by weight) | Sintering conditions | |
|---|---|---|---|
| | | Temperature (°C) | Holding time (min) |
| 2 | 4%YMgSi$_3$ON$_5$-96%Si$_3$N$_4$ | 1850 | 90 |
| 3 | 3%YMgON-3%MgSiN$_2$-94%Si$_3$N$_4$ | 1800 | 120 |

TABLE 4

| Sample No. and position | Hard-ness (HRA) | Thermal shock test (°C) | Klc (MN/m$_{3/2}$) | Sample No. and position | Hard-ness (HRA) | Thermal shock test (°C) | Klc (MN/m$_{3/2}$) |
|---|---|---|---|---|---|---|---|
| Central portion of 2 | 94.2 | 700 | 8.96 | Peripheral portion of 3 | 94.1 | 720 | 9.95 |
| Central portion of 3 | 93.9 | 740 | 9.27 | Peripheral portion of 4 | 93.9 | 760 | 9.28 |

Example 3

The Si$_3$N$_4$ having an average grain diameter of 1 μm which was used in Example 1, Y$_3$(O$_3$N)$_{0.95}$, Mg$_3$(N$_2$)$_{0.90}$ and AlN$_{0.90}$ which were substoichiometric compounds, were used and blended as in Table 5. A mixed powder of each sample was prepared in the same procedure as in Example 1, and was then sintered under the same manufacturing conditions as in Example 1 with the exception that a pressure sintering of using an N$_2$ gas of about 1 MPa (10 kg/cm$^2$) was utilized, alternatively in addition to it, an HIP treatment of using an Ar gas was afterward used. Properties of the resulting sintered bodies are shown in Table 6. These properties of the sintered bodies were examined following the same procedure as in Example 1.

TABLE 5

| Sample No. | Blended components (% by weight) | Sintering conditions | | |
|---|---|---|---|---|
| | | Sintering temperature (°C) | HIP treatment | Holding time (min) |
| 4 | 4%Y$_3$(O$_3$N)$_{0.95}$-2%Mg$_3$(N$_2$)$_{0.90}$-94%Si$_3$N$_4$ | 1850, N$_2$ pressure 26.7 KPa (200 Torr) | none | 90 |
| 5 | 4%Y$_3$(O$_3$N)$_{0.95}$-2%AlN$_{0.90}$-94%Si$_3$N$_4$ | 1850, N$_2$-$\sqrt{}$ (200 Torr) | none | 90 |
| 6 | 2%Y$_3$(O$_3$N)$_{0.95}$-2%AlN$_{0.90}$-2%BN-94%Si$_3$N$_4$ | 1850, N$_2$-$\sqrt{\dfrac{0.1\ MPa}{(1\ atm)}}$ | none | 90 |

EP 0 123 292 B1

# EP 0 123 292 B1

## TABLE 6

| Sample No. and position | Hard-ness (HRA) | Thermal shock test (°C) | KIc (MN/m$_{3/2}$) | Sample No. and position | Hard-ness (HRA) | Thermal shock test (°C) | KIc (MN/m$_{3/2}$) |
|---|---|---|---|---|---|---|---|
| Central portion of 4 | 93.6 | 640 | 9.42 | Peripheral portion of 8 | 93.5 | 620 | 9.40 |
| Central portion of 5 | 94.2 | 660 | 8.23 | Periphal portion of 9 | 94.1 | 660 | 8.24 |
| Central portion of 6 | 94.3 | 620 | 8.15 | Peripheral portion of 10 | 94.4 | 640 | 8.16 |

Example 4

For the sintered bodies according to this invention, i.e. Sample No. 1 in Example 1, Sample No. 5 in Example 3, as well as Comparative Sample No. 1 (sintered body of 4%$Y_2O_3$-4%MgO-92%$Si_3N_4$ in weight) and Comparative sample 2 (sintered body of 5%$Y_2O_3$-2%$Al_2O_3$-93%$Si_3N_4$ in weight) which were sintered in the same procedure as in Example 1, cutting tests were carried out by separating each sample into a central portion and an outer peripheral portion, polishing them in accordance with SNP432 and SNCN54ZTN of JIS Standard, and cutting them under the following conditions (A), (B), (C) and (D). Results obtained are shown in Table 7.

    (A)   Conditions of the cutting tests by turning:
           Work material: FC35 (350 φmm×1500 mm)
           Cutting speed: 600 m/min
           Depth of cut: 1.5 mm
           Feed rate: 0.7 mm/rev
           Cutting time: 30 min
           Tool geometry: SNP432

    (B)   Conditions of the cutting tests by milling:
           Work material: Case hardening steel (HRc45) with black skin)
           Cutting speed: 270 m/min
           Depth of cut: 4.5 mm
           Feed rate of a table: 600 mm/min
           Feed rate per blade: 0.20 mm/rev
           Tool geometry: SNCN54ZTN
           Cutting time: 30 min

    (C)   Conditions of the cutting tests by turning:
           Work material: Ni-base super alloy Waspalloy (HRc42) (Ni-19.4%Cr-13.6%Co-4.4%Mo-3.1%Ti-1.5%Al-0.6%Fe)
           Cutting speed: 150 m/min
           Depth of cut: 0.5 mm
           Feed rate: 0.1 mm/rev
           Cutting fluid: Wet (W1—3)
           Cutting time: 2 min
           Tool geometry: Round shape of RNMN43

    (D)   Conditions of the cutting tests by milling:
           Work material: Carburizing material (HRc55) of SCM3
           Cutting speed: 200 m/min
           Depth of cut: 0.25 mm
           Feed rate per blade: 0.15 mm/rev
           Cutting time: 10 min

TABLE 7

| Sample No. and position | (A) cutting conditions average flank wear ($V_B$ mm) | (B) cutting conditions damage state | (C) cutting conditions average flank wear ($V_B$ mm) | (D) cutting conditions damage state |
|---|---|---|---|---|
| Central portion of 1 | 0.11 | Normal wear | 0.09 | Minute chipping at tip of blade |
| Central portion of 5 | 0.12 | Normal wear | 0.12 | Minute chipping at tip of blade |
| Peripheral portion of 1 | 0.10 | Normal wear | 0.10 | Minute chipping at tip of blade |
| Peripheral portion of 5 | 0.11 | Normal wear | 0.13 | Minute chipping at tip of blade |
| Central portion of comparative sample 1 | 0.35 | Cutting lifetime of chipping was 10 min. | Cutting lifetime was 18 sec. | Lack at tip of blade for 1 min 5 sec. |
| Central portion of comparative sample 2 | 0.30 | Cutting lifetime of chipping was 20 min. | Cutting lifetime was 15 sec. | Lack at tip of blade for 1 min 33 sec. |
| Peripheral portion of comparative sample 1 | 0.18 | Normal wear | Cutting lifetime was 10 sec. | Lack at tip of blade for 23 sec. |
| Peripheral portion of comparative sample 2 | Cutting lifetime was 20 min. | Cutting lifetime of chipping was 10 min. | Cutting lifetime was 5 sec. | Lack at tip of blade for 12 sec. |

EP 0 123 292 B1

As understood from the results in Table 7, the high-strength silicon nitride sintered bodies according to this invention have more excellent wear resistance in turning and chipping resistance in milling cutting than the $Y_2O_3$-MgO-$Si_3N_4$ sintered body and the $Y_2O_3$-$Al_2O_3$-$Si_3N_4$ sintered body which are the Comparative Sample. Further, even when sintered in a great size, each sintered body according to this invention had scarcely any differences of a cutting performance and other properties between its central and outer peripheral portions, and it is very stable also in quality.

It can be estimated from the above-mentioned results that the silicon nitride bodies according to this invention are suitable for an industrial production of heat resistant materials often having large sizes and complicated shapes as well as materials for machining tools used to manufacture many articles.

**Claims**

1. A silicon nitride sintered body containing compounds of rare earth elements characterized by comprising:

(A) 0.5 to 25% by weight of at least one of an oxynitride of rare earth element selected from scandium, yttrium and lanthanide elements;

(B) 0.5 to 25% by weight of at least one of nitride of an element consisting of beryllium, magnesium, calcium, strontium, barium and radium and/or at least one of nitride of an element selected from boron, aluminum, gallium, indium and thallium; and

(C) a remainder consisting of silicon nitride and inevitable impurities,

provided that the combination of (A) yttrium oxynitride with (B) magnesium nitride is excluded.

2. The silicon nitride sintered body according to claim 1, wherein said sintered body comprises 0.5 to 25% by weight of at least one of the oxynitrides of the said rare earth elements; 0.5 to 25% by weight of at least one of the nitrides of B, Al, Ga, In and Tl; and a remainder consisting of the silicon nitride and inevitable impurities.

3. The silicon nitride sintered body according to claim 1, wherein said sintered body comprises 0.5 to 25% by weight of at least one of oxynitride of the said rare earth elements; 0.5 to 25% by weight of at least one of the nitrides of the said elements in group IIa; and a remainder consisting of the silicon nitride and inevitable impurities.

4. A method for preparing a silicon nitride sintered body containing compounds of rare earth elements characterized by comprising the steps of:

(A) obtaining a powder compact or a molded product from a mixed powder comprising:

(i) 0.5 to 25% by weight of at least one of oxynitrides of rare earth elements consisting of scandium, yttrium and lanthanide elements;

(ii) 0.5 to 25% by weight of at least one of nitrides of elements consisting of beryllium, magnesium, calcium, strontium, barium and radium and/or of nitrides of elements selected from boron, aluminum, gallium, indium and thallium; and

(iii) a remainder consisting of silicon nitride and inevitable impurities

provided that the combination of (A) yttrium oxynitride with (B) magnesium nitride is excluded; and

(B) thermally sintering said powder compact or said molded product at a temperature of 1500 to 1900°C in a non-oxidizing atmosphere.

5. A method according to Claim 4, modified in that the mixed powder further comprises one or more of a hydride of elements of groups IV and V in the periodic table in an amount of not more than 5% by weight.

6. A method according to Claim 4, modified in that the mixed powder further comprises oxides, nitrides and oxynitrides of Li, Na and K in such an amount that the properties of the high-strength silicon nitride body is not impaired.

**Patentansprüche**

1. Verbindungen von seltene Erdelemente enthaltendem Siliziumnitrid-Sinterkörper, dadurch gekennzeichnet, dass er umfasst:

(A) 0,5 bis 25 Gew.% wenigstens eines Oxynitrides eines seltenen Erdelementes, ausgewählt aus Scandium, Yttrium und Lanthaniden-Elementen;

(B) 0,5 bis 25 Gew.% wenigstens eines Nitrides eines Elementes, bestehend aus Beryllium, Magnesium, Kalzium, Strontium, Barium und Radium, und/oder wenigstens eines Nitrides eines Elementes, ausgewählt aus Bor, Aluminium, Gallium, Indium, Thallium; und

(C) einem Rest, bestehend aus Siliziumnitrid und unvermeidbaren Verunreinigungen;

mit der Voraussetzung, dass die Kombination von (A) Yttriumoxynitrid mit (B) Magnesiumnitrid ausgeschlossen ist.

2. Siliziumnitrid-Sinterkörper gemäss Anspruch 1, wobei der Sinterkörper umfasst: 0,5 bis 25 Gew.% wenigstens eines der Oxynitride der seltenen Erdelemente; 0,5 bis 25 Gew.% wenigstens eines der Nitride von B, Al, Ga, In und Tl; wobei der Rest aus Siliziumnitrid und unvermeidbaren Verunreinigungen besteht.

3. Siliziumnitrid-Sinterkörper gemäss Anspruch 1, bei dem der Sinterkörper umfasst: 0,5 bis 25 Gew.% wenigstens eines der Oxynitride der seltenen Erdelemente; 0,5 bis 25 Gew.% wenigstens eines der Nitride der Elemente in Gruppe IIa, wobei der Rest aus Siliziumnitrid und unvermeidbaren Verunreinigungen besteht.

4. Verfahren zur Herstellung eines Verbindungen von seltenen Erdelementen enthaltenden Siliziumnitrid-Sinterkörpers, dadurch gekennzeichnet, dass es die Stufen umfasst:

(A) Erhalten eines kompaktierten Pulvers oder eines geformten Produktes aus einem Mischpulver, umfassend:

(i) 0,5 bis 25 Gew.% wenigstens eines Oxynitrides der seltenen Erdelemente, bestehend aus Scandium, Yttrium und Lantaniden-Elementen,

(ii) 0,5 bis 25 Gew.% wenigstens eines der Nitride von Elementen, bestehend aus Beryllium, Magensium, Kalzium, Strontium, Barium und Radium, und/oder von Nitriden von Elementen, ausgewählt aus Bor, Aluminium, Gallium, Indium und Thallium, und

(iii) wobei der Rest aus Siliziumnitrid und unvermeidbaren Verunreinigungen besteht,

wobei die Kombination von (A) Yttriumoxynitrid mit (B) Magnesiumnitrid ausgeschlossen ist; und

(B) thermisches Sintern des kompaktierten Pulvers oder des geformten Produktes bei einer Temperatur von 1500 bis 1900°C in einer nicht-oxidierenden Atmosphäre.

5. Verfahren gemäss Anspruch 4, dahingehend modifiziert, dass das Mischpulver weiterhin ein oder mehrere Hydride von Elementen der Gruppe IV und V des periodischen Systems in einer Menge von nicht mehr als 5 Gew.% umfasst.

6. Verfahren gemäss Anspruch 4, dahingehend modifiziert, dass das Mischpulver weiterhin Oxide, Nitride und Oxynitride von Li, Na und K in solchen Mengen umfasst, dass die Eigenschaften des hochfesten Siliziumnitridkörpers nicht verschlechtert werden.

**Revendications**

1. Corps fritté à base de nitrure de silicium contenant des composés de terres rares, caractérisé par le fait qu'il comprend:

(A) 0,5 à 25% en poids d'au moins un oxynitrure d'une terre rare choisie parmi le scandium, l'yttrium et un lanthanide;

(B) 0,5 à 25% en poids d'au moins un nitrure d'un élément choisi parmi le baryllium, le magnésium, le calcium, le strontium, le baryum et le radium et/ou au moins un nitrure d'un élément choisi parmi le bore, l'aluminium, le gallium, l'indium et le thallium; et

(C) un complémente constitué de nitrure de silicium et des impuretés inévitables,

étant entendu que la combination de (A) l'oxynitrure d'yttrium avec le (B) nitrure de magnésium est exclue.

2. Corps fritté à base de nitrure de silicium selon la revendication 1, dans lequel ledit corps fritté comprend de 0,5 à 25% en poids d'au moins un des oxynitrures desdites terres rares; 0,5 à 25% en poids d'au moins un des nitrures de B, Al, Ga, In et Tl; et un complément constitué du nitrure de silicium et des impuretés inévitables.

3. Corps fritté à base de nitrure de silicium, selon la revendication 1, dans lequel ledit corps fritté comprend de 0,5 à 25% en poids d'au moins un des oxynitrures desdites terres rares; 0,5 à 25% en poids d'au moins un des nitrures desdits éléments du grupe II A; et un complément constitué du nitrure de silicium et des impuretés inévitables.

4. Procédé de préparation d'un corps fritté à base de nitrure de silicium, contenant des composés de terres rares, caractérisé par le fait qu'elle comprend les étapes de:

A—obtention d'un corps compact de poudres ou d'un produit moulé à partir de poudres mélangées comprenant:

(i) 0,5 à 25% en poids d'au moins un des oxynitrures de terres rares, comprenant le scandium, l'yttrium et les lanthanides

(ii) 0,5 à 25% en poids d'au moins un des nitrures d'éléments choisis parmi le béryllium, le magnésium, le calcium, le strontium, le baryum et le radium et/ou des nitrures d'éléments choisis parmi le bore, l'aluminium, le gallium, l'indium et le thallium

(iii) un complément constitué du nitrure de silicium et des impuretés inévitables

étant entendu que la combinaison de (A) l'oxynitrure d'yttrium avec (B) le nitrure de magnésium est exclue et,

B—frittage thermique dudit corps compact de poudres ou dudit produit moulé à une température située entre 1500 et 1900°C en atmosphère non oxydante.

5. Procédé, selon la revendication 4, modifié dans le sens que la poudre mélangée comprend en plus un ou plusieurs hydrures d'éléments des groupes IV et V de la classification périodique dans une proportion ne dépassant pas 5% en poids.

6. Procédé, selon la revendication 4, modifié dans le sens que la poudre mélangée comprend en plus des oxydes, des nitrures et des oxynitrures de Li, Na et K, dans des proportions telles que les propriétés du corps en nitrure de silicium à résistance mécanique élevée ne soient pas altérées.